# EUROPEAN PATENT APPLICATION

(11) **EP 4 403 976 A1**
(43) Date of publication of application: **24.07.2024**
(21) Application number: 24152345.5
(22) Date of filing: 17.01.2024
(51) Int. Cl.: G02B 19/00, G02B 27/10, G02B 27/14, G03B 21/20

(54) **LIGHT SOURCE MODULE AND PROJECTION APPARATUS**

(30) Priority: 19.01.2023 CN 202310057530
(71) Applicant: Coretronic Corporation, Hsin-Chu 300 (TW)
(72) Inventor: Chang, Jui, Hsin-Chu 300 (TW)
(74) Representative: Ter Meer Steinmeister & Partner

(57) **Abstract**

A light source module includes first to second laser arrays, first to fourth light guiding elements, and an optical lens element. The first laser array provides first light and second light. The second laser array provides third light and fourth light. The first to the fourth light guiding elements are located between the first and the second laser arrays. The first light guiding element is adapted to reflect the first light. The second light guiding element is adapted to reflect the second light and allowing the first light to pass through. The third light guiding element is adapted to reflect the third light. The fourth light guiding element is adapted to reflect the fourth light and allowing the third light to pass through. An orthographic projection of the second light guiding element partially overlaps an orthographic projection of the fourth light guiding element on the optical lens element.

## Description

### BACKGROUND

### Technical Field

The disclosure relates to an optical module and an electronic device, in particular to a light source module and a projection apparatus.

### Description of Related Art

A projection apparatus is a display apparatus used to generate large-size images. With the evolution and innovation of technology, it has been continuously improved. An imaging principle of the projection apparatus is to convert an illumination light generated by an illumination system into an image light through a light valve, and then project the image light to a projection target (such as a screen or a wall) through a projection lens to form a projection image. In addition, the illumination system has evolved from ultra-high-performance lamp (UHP lamp), light-emitting diode (LED), to the most advanced laser diode (LD) light source, in line with the market's requirements for brightness, color saturation, service life, non-toxic environmental protection, etc., and even an all-in-one laser diode packaged light source has been introduced.

In order to improve color uniformity and reduce the overall size, the optical path in the system is usually designed to combine blue and green light before entering the optical engine system. However, in the current architecture, optical elements of thick glass are mostly used for combining light, and the cost of such optical elements is high. In addition, in order to match the red light, the blue and green light needs to be diffused after combining, but this adds additional cost and volume.

The information disclosed in this Background section is only for enhancement of understanding of the background of the described technology and therefore it may contain information that does not form the prior art that is already known to a person of ordinary skill in the art. information disclosed in the Background section does not mean that one or more problems to be resolved by one or more embodiments of the disclosure was acknowledged by a person of ordinary skill in the art.

### SUMMARY

The disclosure provides a light source module and a projection apparatus, which may uniform multiple light spots formed by beams on a light incident surface of an optical lens element, thus improving color uniformity and reducing the volume and cost.

Other purposes and advantages of the disclosure can be further understood from the technical features disclosed in the disclosure.

The object is solved by the features of the independent claims. Preferred embodiments are given in the dependent claims.

To achieve one or part or all of the above objectives or other objectives, the disclosure provides a light source module including a first laser array, a second laser array, a first light guiding element, a second light guiding element, a third light guiding element, fourth light guiding element, and an optical lens element. The first laser array provides a first light and a second light in a direction parallel to a first direction. The second laser array provides a third light and a fourth light in the direction parallel to the first direction. The second laser array and the first laser array are respectively located on opposite sides of a central axis of the optical lens element. The first light guiding element, the second light guiding element, the third light guiding element, and the fourth light guiding element are located between the first laser array and the second laser array. The first light guiding element is adapted to reflect the first light from the first laser array to the second light guiding element. The second light guiding element is adapted to reflect the second light from the first laser array and allowing the first light from the first light guiding element to pass through to the optical lens element. The third light guiding element is adapted to reflect the third light from the second laser array to the fourth light guiding element. The fourth light guiding element is adapted to reflect the fourth light from the second laser array and allowing the third light from the third light guiding element to pass through to the optical lens element. An orthographic projection of the second light guiding element partially overlaps an orthographic projection of the fourth light guiding element on the optical lens element.

To achieve one or part or all of the above objectives or other objectives, the disclosure further provides a projection apparatus including an illumination system, at least one light valve, and a projection lens. The illumination system is adapted to provide an illumination light. The illumination system includes a light source module. The light source module includes a first laser array, a second laser array, a first light guiding element, a second light guiding element, a third light guiding element, a fourth light guiding element, and an optical lens element. The first laser array provides a first light and a second light in a direction parallel to the first direction. The second laser array provides a third light and a fourth light in the direction parallel to the first direction. The second laser array and the first laser array are respectively located on opposite sides of a central axis of the optical lens element. The first light guiding element, the second light guiding element, the third light guiding element, and the fourth light guiding element are located between the first laser array and the second laser array. The first light guiding element is adapted to reflect the first light from the first laser array to the second light guiding element. The second light guiding element is adapted to reflect the second light from the first laser array and allowing the first light from the first light guiding element to pass through to the optical lens element. The third light guiding element is adapted to reflect the third light from the second laser array to the fourth light guiding element. The fourth light guiding element is adapted to reflect the fourth light from the second laser array and allowing the third light from the third light guiding element to pass through to the optical lens element. An orthographic projection of the second light guiding element partially overlaps an orthographic projection of the fourth light guiding element on the optical lens element. The at least one light valve is disposed on a transmission path of the illumination light to convert the illumination light into an image light. The projection lens is disposed on a transmission path of the image light to project the image light out of the projection apparatus.

In the following optional features are provided, which can be combined with the above mentioned aspects independently, in combination or in sub combination.

In one or more embodiments, the first laser array and the second laser array may be arranged in the first direction and staggered in a second direction.

In one or more embodiments, the second direction may be perpendicular to the first direction.

In one or more embodiments, a wavelength of the first light may be the same as a wavelength of the third light.

In one or more embodiments, a wavelength of the second light may be the same as a wavelength of the fourth light.

In one or more embodiments, a plurality of first light spots formed by the first light on a light incident surface of the optical lens element and a plurality of third light spots formed by the third light on the light incident surface of the optical lens element may be arranged diagonally symmetrically or in an array to a lens element center of the optical lens element.

In one or more embodiments, a plurality of second light spots formed by the second light on the light incident surface of the optical lens element and a plurality of fourth light spots formed by the fourth light on the light incident surface of the optical lens element may be arranged diagonally symmetrically or in an array to the lens element center of the optical lens element.

In one or more embodiments, the lens element center may be located on the central axis of the optical lens element.

In one or more embodiments, the first laser array may further provide a fifth light in the direction parallel to the first direction.

In one or more embodiments, the second laser array may further provide a sixth light in the direction parallel to the first direction.

In one or more embodiments, one of the first light guiding element and the second light guiding element may be adapted to reflect the fifth light from the first laser array.

In one or more embodiments, one of the third light guiding element and the fourth light guiding elements may be adapted to reflect the sixth light from the second laser array.

In one or more embodiments, a wavelength of the fifth light may be the same as a wavelength of the sixth light.

In one or more embodiments, the first light guiding element and the second light guiding element may be arranged in a second direction.

In one or more embodiments, the third light guiding element and the fourth light guiding element may be arranged in the second direction.

In one or more embodiments, the second direction may be perpendicular to the first direction.

In one or more embodiments, the first light guiding element and the third light guiding element may be reflectors.

In one or more embodiments, a maximum distance between the first light guiding element and the third light guiding element in the first direction may be greater than a maximum distance between the second light guiding element and the fourth light guiding element in the first direction.

In one or more embodiments, the light source module may meet a formula: 1.0<(b/a)<4.0, where "b" is a distance from a spot center of a plurality of light spots formed by the first light or the third light on the optical lens element to a lens element center of the optical lens element in the first direction, and "a" is a distance from the spot center of the plurality of light spots formed by the first light or the third light on the optical lens element to the lens element center of the optical lens element in a direction perpendicular to the first direction.

In one or more embodiments, the light source module may meet a formula: c-d <e<c+d, where "c" is a thickness of the first light guiding element, the second light guiding element, the third light guiding element, and the fourth light guiding element divided by a root number 2, "d" is 0.1 times the thickness of the first light guiding element, the second light guiding element, the third light guiding element, and the fourth light guiding element, and "e" is a length in the first direction of an overlap of an orthographic projection of the second light guiding element and an orthographic projection of the fourth light guiding element formed on a light incident surface of the optical lens element.

In one or more embodiments, the illumination system may further comprise a light uniforming element disposed on a transmission path of the first light to the fourth light from the optical lens element.

In one or more embodiments, the light source module may meet a formula: 1.4 ≦ f * tan( *θ* )/h ≦ 3.7, where "f" is a length in a direction of an optical axis of the light uniforming element, "*θ*" is an angle between a maximum length from the optical lens element to the light uniforming element and a minimum length from the optical lens element to the light uniforming element, and "h" is a length of a long side of the light uniforming element in a direction perpendicular to the direction of the optical axis.

Based on the above, the embodiments of the disclosure have at least one of the following advantages or functions. In the light source module and the projection apparatus of the disclosure, the first laser array provides the first light and the second light in the direction parallel to the first direction, the second laser array provides the third light and the fourth light in the direction parallel to the first direction. The first light guiding element to the fourth light guiding element are located between the first laser array and the second laser array to reflect the first light to the fourth light or allow the first light to the fourth light to pass through. In this way, the first light to the fourth light may be guided to the optical lens element by the first light guiding element to the fourth light guiding element, and the light spots formed by the first light to the fourth light on the light incident surface of the optical lens elements may be uniformed to improve the color uniformity, and a light combiner and a light expanding structure made of thick glass may be saved to reduce the volume and cost.

Other objectives, features and advantages of the disclosure will be further understood from the further technological features disclosed by the embodiments of the disclosure wherein there are shown and described preferred embodiments of this disclosure, simply by way of illustration of modes suit to best out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a projection apparatus of an embodiment of the disclosure.
FIG. 2 is a schematic diagram of an illumination system of an embodiment of the disclosure.
FIG. 3 is a three-dimensional schematic diagram of the illumination system in FIG. 2.
FIG. 4A to FIG. 4C are schematic diagrams of light spots formed by different light beams on a light incident surface of an optical lens element in a light source module of FIG. 2.
FIG. 5 is a schematic diagram of an optical lens element and a light uniforming element in an illumination system according to an embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top" "bottom," "front," "back," etc., is used with reference to the direction of the Figure(s) being described. The components of the disclosure can be positioned in a number of different directions. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations herein is meant to encompass the items listed thereafter and equivalents thereof as well as additional items. Unless limited otherwise, the terms " connected," "coupled," and "mounted" and variations therein are used broadly and encompass direct and indirect connections, couplings, and mountings. Similarly, the terms "facing," "faces" and variations therein are used broadly and encompass direct and indirect facing, and "adjacent to" and variations therein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

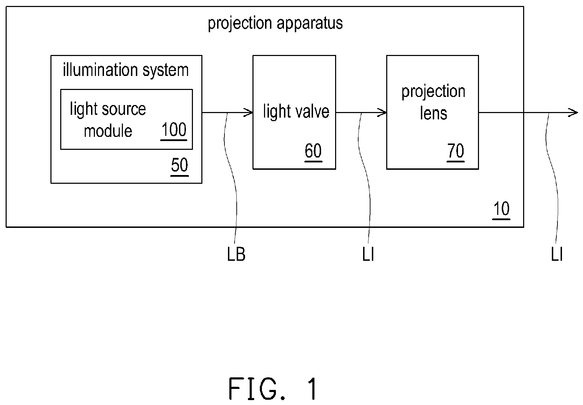

FIG. 1 is a schematic diagram of a projection apparatus according to an embodiment of the disclosure. Referring to FIG. 1, this embodiment provides a projection apparatus 10 including an illumination system 50, at least one light valve 60, and a projection lens 70. The illumination system 50 is adapted to provide an illumination light LB. The at least one light valve 60 is disposed on a transmission path of the illumination light LB to convert the illumination light LB into an image light LI. The projection lens 70 is disposed on a transmission path of the image light LI, and is adapted to project the image light LI out of the projection apparatus 10 to a projection target (not shown), such as a screen or a wall.

The illumination system 50 is adapted to provide the illumination light LB. For example, in this embodiment, the illumination system 50 includes, for example, multiple light emitting elements, wavelength conversion elements, reflective elements 52, filter elements 54, light uniforming elements 56 and/or multiple light guiding elements to provide light with different wavelengths for subsequent formation of the image light LI. The light emitting elements are, for example, laser diodes (LD); the wavelength conversion element is, for example, a phosphor wheel; the filter element is, for example, a filter wheel; the light uniforming element is, for example, a light integration column, which can be composed of a reflector, for example, to enhance uniformity of a laser light by using multiple reflections; the light guiding element is, for example, a dichroic mirror or a reflector. However, the disclosure does not limit the type or form of the illumination system 50 in the projection apparatus 10. The detailed structure and implementation of the illumination system 50 in the projection apparatus 10 may be adequately taught, recommended and illustrated by the subsequent description and the common knowledge of the technical field.

The light valve 60 is, for example, a reflective light modulator such as a liquid crystal on silicon panel (LCOS panel) or a digital micro-mirror device (DMD). In some embodiments, the light valve 60 may also be a transmissive light modulator such as a transparent liquid crystal panel, an electro-optical modulator, a magneto-optic modulator, and an acousto-optic modulator (AOM). The disclosure provides no limitation to the form and type of the light valve 60. The detailed steps and implementation of the method for the light valve 60 to convert the illumination light LB into the image light LI may be obtained from the common knowledge in the technical field with sufficient teaching, suggestion and implementation, and therefore no further description is incorporated herein. In this embodiment, the number of the light valve 60 is one, for example, the projection apparatus 10 using a single digital micro-mirror element. However, in other embodiments there may be more than one light valve, and the disclosure is not limited thereto.

The projection lens 70 includes, for example, one or a combination of multiple optical lens elements with diopter values, such as various combinations of non-planar lenses including biconcave lenses, biconvex lenses, concave-convex lenses, convex-concave lenses, plane-convex lenses, plane-concave lenses, etc. In an embodiment, the projection lens 70 may further include a plane optical lens element to project the image light LI from the light valve 60 to the projection target in a reflective manner. The disclosure does not limit the form and type of the projector lens 70.

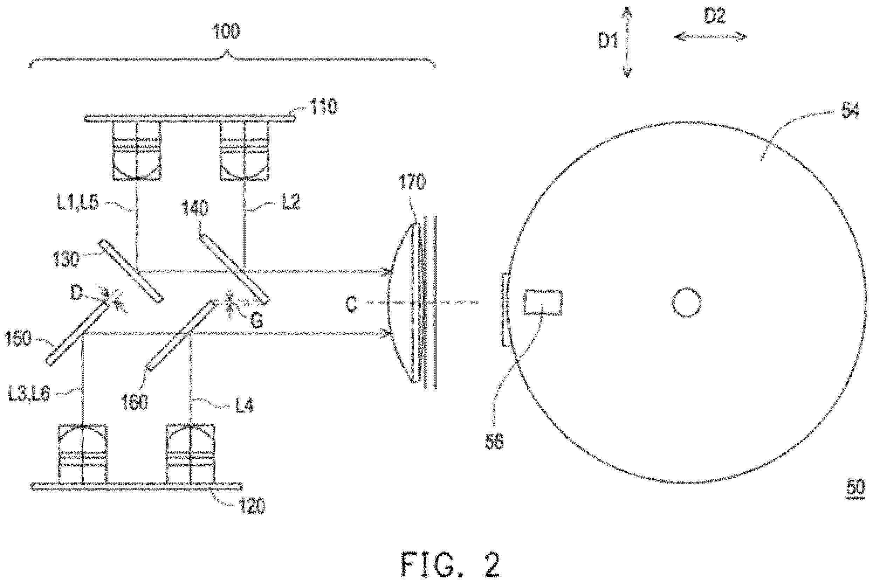

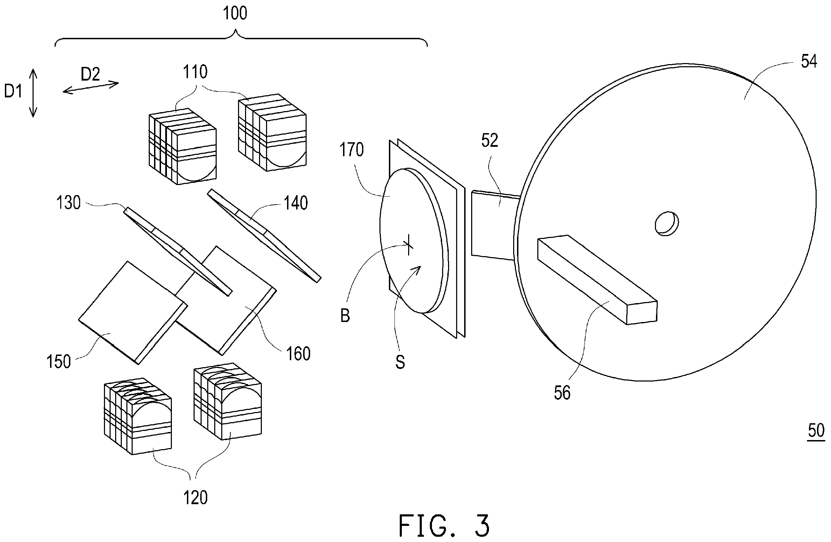

FIG. 2 is a schematic diagram of an illumination system according to an embodiment of the disclosure. FIG. 3 is a three-dimensional schematic diagram of the illumination system in FIG. 2. A light source module 100 shown in FIG. 2 and FIG. 3 may be applied at least in the projection apparatus 10 shown in FIG. 1, which is thus illustrated below as an example. Referring to FIG. 2 and FIG. 3, FIG. 3 omits a substrate structure of a first laser array 110 and a second laser array 120 and a light provided to make the picture concise. The illumination system 50 includes a light source module 100, and the light source module 100 includes a first laser array 110, a second laser array 120, a first light guiding element 130, a second light guiding element 140, a third light guiding element 150, a fourth light guiding element 160, and an optical lens element 170. The second laser array 120 and the first laser array 110 are respectively located on opposite sides of a central axis C of the optical lens element 170, and the first light guiding element 130, the second light guiding element 140, the third light guiding element 150, and the fourth light guiding element 160 are located between the first laser array 110 and the second laser array 120. D is a thickness of the light guiding element, and the thickness D of the third light guiding element 150 of FIG. 2 is taken as an example.

In this embodiment, each of the first laser array 110 and the second laser array 120 has multiple red laser diodes, multiple blue laser diodes, and multiple green laser diodes. The multiple red laser diodes are configured to provide multiple red laser light beams. The multiple blue laser diodes are configured to provide multiple blue laser light beams. The multiple green laser diodes are configured to provide multiple green laser light beams.

In detail, the first laser array 110 provides a first light L1 and a second light L2 in a direction parallel to a first direction D 1, and the second laser array 120 provides a third light L3 and a fourth light L4 in the direction parallel to the first direction D. Each of the first light L1, the second light L2, the third light L3 and the fourth light L4 may be understood to include multiple laser light beams.

For example, each of the first laser array 110 and the second laser array 120 packages multiple laser diodes. In this embodiment, the first laser array 110 and the second laser array 120 are arranged in the first direction D1 and staggered in a second direction D2. The second direction D2 is perpendicular to the first direction D1. The first light L1 is, for example, green light or blue light, and the second light L2 is, for example, red light. However, the first light L1 may also be, for example, red light, and the second light L2 may also be, for example, green light or blue light. The third light L3 is, for example, green light or blue light, and the fourth light L4 is, for example, red light. However, the third light L3 may also be, for example, red light, and the fourth light L4 may also be, for example, green light or blue light. In the first laser array 110, the laser diodes for providing the first light L1 and the laser diodes for providing the second light L2 are positioned differently in the second direction D2. In the second laser array 120, the laser diodes for providing the third light L3 and the laser diodes for providing the fourth light L4 are positioned differently in the second direction D2. The orthographic projections of the laser diodes in the first laser array 110 used to provide the first light L1 and the laser diodes in the second laser array 120 used to provide the third light L3 on a reference plane perpendicular to the first direction D1 are staggered from each other. The orthographic projections of the laser diodes in the first laser array 110 used to provide the second light L2 and the laser diodes in the second laser array 120 used to provide the fourth light L4 on the reference plane are staggered from each other. In this embodiment, a wavelength of the first light L1 is the same as that of the third light L3, and the wavelength of the second light L2 is the same as a wavelength of the fourth light L4. In other words, the first laser array 110 and the second laser array 120, for example, package the same laser diodes.

The first light guiding element 130 is adapted to reflect the first light L1 from the first laser array 110 to the second light guiding element 140. The second light guiding element 140 is adapted to reflect the second light L2 from the first laser array 110 and allowing the first light L1 from the first light guiding element 130 to pass through to the optical lens element 170. The third light guiding element 150 is adapted to reflect the third light L3 from the second laser array 120 to the fourth light guiding element 160. The fourth light guiding element 160 is adapted to reflect the fourth light L4 from the second laser array 120 and allowing the third light L3 from the third light guiding element 150 to pass through to the optical lens element 170. For example, in this embodiment, the first light guiding element 130 and the third light guiding element 150 are reflectors, while the second light guiding element 140 and the fourth light guiding element 160 are dichroic mirrors. Specifically, in this embodiment, the first light guiding element 130 and the second light guiding element 140 are arranged in the second direction D2, the third light guiding element 150 and the fourth light guiding element 160 are arranged in the second direction D2. The first light guiding element 130 is disposed on a transmission path of the first light L1, the second light guiding element 140 is disposed on a transmission path of the second light L2, the third light guiding element 150 is disposed on a transmission path of the third light L3, and the fourth light guiding element 160 is disposed on a transmission path of the fourth light L4.

It should be noted that an orthographic projection of the second light guiding element 140 on the optical lens element 170 partially overlaps an orthographic projection of the fourth light guiding element 160 on the optical lens element 170. That is, the orthographic projection of the second light guiding element 140 partially overlaps the orthographic projection of the fourth light guiding element 160 on a reference plane perpendicular to the second direction D2, and the two orthographic projections have an overlap length on the first direction D1. The orthographic projection of the second light guiding element 140 partially overlaps the orthographic projection of the fourth light guiding element 160 on a reference plane perpendicular to the first direction D1, and the two orthographic projections have an overlap length on the second direction D2. For example, in this embodiment, by configuring a distance between the second light guiding element 140 and the optical lens element 170 to be less than a distance between the fourth light guiding element 160 and the optical lens element 170, and the two orthographic projections of the second light guiding element 140 and the fourth light guiding element 160 on the reference plane perpendicular to the second direction D2 may have an overlap length in the first direction D1. In addition, the orthographic projection of the first light guiding element 130 on the optical lens element 170 partially overlaps the orthographic projection of the third light guiding element 150 on the optical lens element 170. That is, the orthographic projection of the first light guiding element 130 partially overlaps the orthographic projection of the third light guiding element 150 on a reference plane perpendicular to the second direction D2, and the two orthographic projections have an overlapping length on the first direction D1. The orthographic projection of the first light guiding element 130 partially overlaps the orthographic projection of the third light guiding element 150 on the reference plane perpendicular to the first direction D1, and the two orthographic projections have an overlapping length on the second direction D2. In this way, the first light L1 to the fourth light L4 may be guided to the optical lens element 170 by the first light guiding element 130 to the fourth light guiding element 160, and multiple light spots formed by the first light L1 to the fourth light L4 on a light incident surface S of the optical lens element 170 may be uniformed to improve color uniformity, and a light combiner and a light expanding structure made of thick glass may be saved to reduce the volume and cost.

In detail, in this embodiment, the first laser array 110 may further provide a fifth light L5 in the direction parallel to the first direction D1, and the second laser array 120 may further a sixth light L6 in the direction parallel to the first direction D1. One of the first light guiding element 130 and the second light guiding element 140 is adapted to reflect the fifth light L5 from the first laser array 110, and one of the third light guiding element 150 and the fourth light guiding element 160 is adapted to reflect the sixth light L6 from the second laser array 120. A wavelength of the fifth light L5 is the same as a wavelength of the sixth light L6. For example, in this embodiment, the first light L1 provided by the first laser array 110 is green light, the second light L2 is red light, and the fifth light L5 is blue light. The third light L3 provided by the second laser array 120 is green light, the fourth light L4 is red light, and the sixth light L6 is blue light. Each of the fifth light L5 and the sixth light L6 may also be understood to include multiple laser light beams.

Therefore, according to intensity characteristics of the red, blue, and green lasers, the multiple blue laser diodes and the multiple green laser diodes may be disposed in one of the first laser array 110 and the second laser array 120, and the multiple red laser diodes may be disposed in another one of the first laser array 110 and the second laser array 120 to balance the light intensity of the red, blue, and green light. Therefore, the first light guiding element 130 is disposed on a transmission path of the first light L1 and the fifth light L5, the second light guiding element 140 is disposed on a transmission path of the second light L2, the third light guiding element 150 is disposed on a transmission path of the third light L3 and the fifth light L5, and the fourth light guiding element 160 is disposed on a transmission path of the fourth light L4. In this embodiment, the first laser array 110 and the second laser array 120 respectively have four red laser diodes, two blue laser diodes, and three green laser diodes, but the disclosure is not limited thereto. That is, the number of the red laser diodes, blue laser diodes and green laser diodes can be greater, for example, the number of red laser diodes is five.

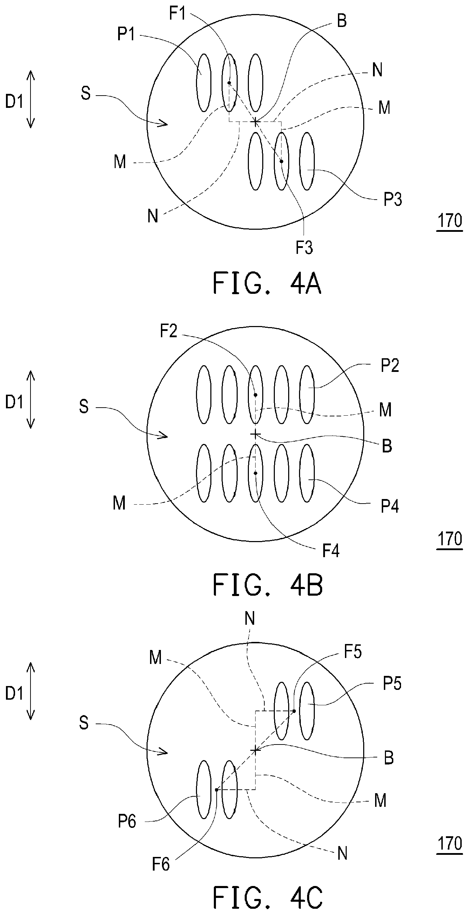

FIG. 4A to FIG. 4C are schematic diagrams of light spots formed by different light beams on a light incident surface of an optical lens element in a light source module of FIG. 2. Referring to FIG. 2 and FIG. 4A to FIG. 4C at the same time, the first light L1 of green light is transmitted to the light incident surface S of the optical lens element 170 by the first light guiding element 130 to form multiple first light spots P1.The third light L3 of green light is transmitted to the light incident surface S of the optical lens element 170 by the third light guiding element 150 to form multiple third light spots P3. As shown in FIG. 4A, the first light spots P1 and the third light spots P3 are diagonally symmetrical to a lens element center B of the optical lens element 170. The second light L2 of red light is transmitted to the light incident surface S of the optical lens element 170 by the second light guiding element 140 to form multiple second light spots P2. The fourth light L4 of red light is transmitted to the light incident surface S of the optical lens element 170 by the fourth light guiding element 160 to form multiple fourth light spots P4. As shown in FIG. 4B, the second light spots P2 and the fourth light spots P4 are arranged in an array at the lens element center B of the optical lens element 170. The fifth light L5 of blue light is transmitted to the light incident surface S of the optical lens element 170 by the first light guiding element 130 to form multiple fifth light spots P5. The sixth light L6 of blue light is transmitted to the light incident surface S of the optical lens element 170 by the third light guiding element 150 to form multiple sixth light spots P6. As shown in FIG. 4C, the fifth light spots P5 and the sixth light spots P6 are diagonally symmetrical to the lens element center B of the optical lens element 170. The presentation of the above multiple light spots (multiple first light spots P1, multiple second light spots P2, multiple third light spots P3, multiple fourth light spots P4, multiple fifth light spots P5 and multiple sixth light spots P6) in FIG. 4A, FIG. 4B and FIG. 4C is an example, but the disclosure is not limited thereto.

For the diagonally symmetrical light spots, in a preferred embodiment, the light source module 100 meets a formula: 1.0<(b/a)<4.0, where "b" is a distance M from spot centers F1, F3, F5, and F6 of multiple light spots (i.e., FIG. 4A or FIG. 4C) formed by light (for example, the first light L1 and the third light L3 of green light, and the fifth light L5 and the sixth light L6 of blue light) on the optical lens element 170 to the lens element center B of the optical lens element 170 in the first direction D1, and "a" is a distance N from the spot center of the light spots formed by the light (for example, the first light L1 and the third light L3 of green light, and the fifth light L5 and the sixth light L6 of blue light) on the optical lens element 170 to the lens element center B of the optical lens element 170 in a direction perpendicular to the first direction D 1. In this way, the light source module 100 may have better luminous efficiency, and the light spots formed by the blue and green light on the optical lens element 170 may be symmetrical.

In addition, in a preferred embodiment, the light source module 100 meets a formula: c-d <e<c+d, where "c" is a thickness D of the first light guiding element 130, the second light guiding element 140, the third light guiding element 150, and the fourth light guiding element 160 divided by a root number 2, "d" is 0.1 times the thickness D of the first light guiding element 130, the second light guiding element 140, the third light guiding element 150, and the fourth light guiding element 160, and "e" is a length in the first direction D1 of an overlap of an orthographic projection of the second light guiding element 140 and an orthographic projection of the fourth light guiding element 160 formed on the light incident surface S of the optical lens element 170 (i.e., a length G shown in FIG. 2). In this way, the distances from the spot centers F1, F2, F3, F4, F5, and F6 of the light spots to the lens element center B of the optical lens element 170 may be further reduced, i.e., the light spots may be concentrated.

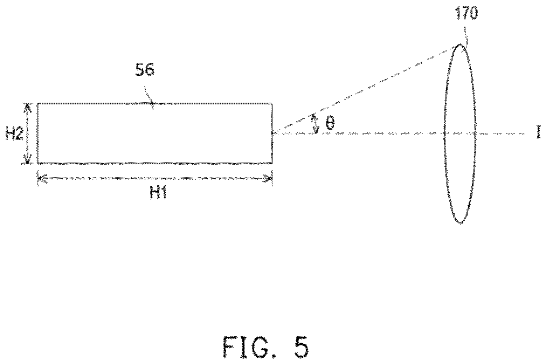

FIG. 5 is a schematic diagram of an optical lens element and a light uniforming element in an illumination system according to an embodiment of the disclosure. Please refer to FIG. 2 and FIG. 5 at the same time. In addition, the light uniforming element 56 of the illumination system 50 is disposed on a transmission path of the light (i.e., the first light L1 to the sixth light L6) from the optical lens element 170, and a light receiving surface of the light uniforming element 56 is rectangular with long sides and short sides. In a preferred embodiment, the light source module 100 meets a formula: 1.4 ≦ f *tan( *θ* )/h ≦ 3.7, where "f" is a length H1 in a direction of an optical axis I of the light uniforming element 56, "*θ*" is an angle between a maximum length from the optical lens element 170 to the light uniforming element 56 and a minimum length from the optical lens element 170 to the light uniforming element 56, and "h" is a length H2 of a long side of the light uniforming element 56 in a direction perpendicular to the optical axis I. In this way, the luminous efficiency and uniformity of the illumination system 50 may be further improved, and the design of ≦ 3.7 may make the better utilization of the light uniforming element 56 in space.

In addition, in other embodiments, a maximum distance between the first light guiding element 130 and the third light guiding element 150 in the first direction D1 is greater than a maximum distance between the second light guiding element 140 and the fourth light guiding element 160 in the first direction D1, the maximum distance described herein being defined as a distance between the more distant ends of two objects. In this way, transmission optical paths of the first light L1 and the third light L3 may be further avoided to overlap with transmission optical paths of the second light L2 and the fourth light L4, but the disclosure is not limited thereto.

To sum up, In the light source module and the projection apparatus of the disclosure, the first laser array provides the first light and the second light in the direction parallel to the first direction, the second laser array provides the third light and the fourth light in the direction parallel to the first direction. The first light guiding element to the fourth light guiding element are located between the first laser array and the second laser array to reflect the first light to the fourth light or allow the first light to the fourth light to pass through. In this way, the first light to the fourth light may be guided to the optical lens element by the first light guiding element to the fourth light guiding element, and the light spots formed by the first light to the fourth light on the light incident surface of the optical lens elements may be uniformed to improve the color uniformity, and a light combiner and a light expanding structure made of thick glass may be saved to reduce the volume and cost. In addition, "first direction" and "second direction" described in all the embodiments of the present disclosure refer to D1 and D2 as shown in the figure, that is, "first direction" is the two opposite directions in which the "D1" line extends, "second direction" is the two opposite directions in which the "D2" line extends.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby enabled per in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. ore, the term "the disclosure" does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as d defined by the following claims. Furthermore, no element and component in the present disclosure is intended to be dedicated to the public regardless of whether the element or component is explicitly recited in the following claims.

## Claims

1. A light source module (100) comprising a first laser array (110), a second laser array (120), a first light guiding element (130), a second light guiding element (140), a third light guiding element (150), a fourth light guiding element (160), and an optical lens element (170), wherein:
the first laser array (110) provides a first light (L1) and a second light (L2) in a direction parallel to a first direction (D1);
the second laser array (120) provides a third light (L3) and a fourth light (L4) in the direction parallel to the first direction (D1), the second laser array (120) and the first laser array (110) are respectively located on opposite sides of a central axis (C) of the optical lens element (170), and the first light guiding element (130), the second light guiding element (140), the third light guiding element (150), and the fourth light guiding element (160) are located between the first laser array (110) and the second laser array (120);
the first light guiding element (130) is adapted to reflect the first light (L1) from the first laser array (110) to the second light guiding element (140);
the second light guiding element (140) is adapted to reflect the second light (L2) from the first laser array (110) and allowing the first light (L1) from the first light guiding element (130) to pass through to the optical lens element (170);
the third light guiding element (150) is adapted to reflect the third light (L3) from the second laser array (120) to the fourth light guiding element (160); and
the fourth light guiding element (160) is adapted to reflect the fourth light (L4) from the second laser array (120) and allowing the third light (L3) from the third light guiding element (150) to pass through to the optical lens element (170), wherein
an orthographic projection of the second light guiding element (140) partially overlaps an orthographic projection of the fourth light guiding element (160) on the optical lens element (170).

2. The light source module according to claim 1, wherein the first laser array (110) and the second laser array (120) are arranged in the first direction (D1) and staggered in a second direction (D2), and the second direction (D2) is perpendicular to the first direction (D1).

3. The light source module according to claim 1 or 2, wherein a wavelength of the first light (L1) is the same as a wavelength of the third light (L3), and a wavelength of the second light (L2) is the same as a wavelength of the fourth light (L4).

4. The light source module according to any one of the preceding claims, wherein a plurality of first light spots (P1) formed by the first light (L1) on a light incident surface (S) of the optical lens element (170) and a plurality of third light spots (P3) formed by the third light (L3) on the light incident surface (S) of the optical lens element (170) are arranged diagonally symmetrically or in an array to a lens element center (B) of the optical lens element (170), a plurality of second light spots (P2) formed by the second light (L2) on the light incident surface (S) of the optical lens element (170) and a plurality of fourth light spots (P4) formed by the fourth light (L4) on the light incident surface (S) of the optical lens element (170) are arranged diagonally symmetrically or in an array to the lens element center (B) of the optical lens element (170), and the lens element center (B) is located on the central axis (C) of the optical lens element (170).

5. The light source module according to any one of the preceding claims, wherein the first laser array (110) further provides a fifth light (L5) in the direction parallel to the first direction (D1), and the second laser array (120) further provides a sixth light (L6) in the direction parallel to the first direction (D1), one of the first light guiding element (130) and the second light guiding element (140) is adapted to reflect the fifth light (L5) from the first laser array (110), one of the third light guiding element (150) and the fourth light guiding element (160) is adapted to reflect the sixth light (L6) from the second laser array (130), and a wavelength of the fifth light (L5) is the same as a wavelength of the sixth light (L6).

6. The light source module according to any one of the preceding claims, wherein the first light guiding element (130) and the second light guiding element (140) are arranged in a second direction (D2), and the third light guiding element (150) and the fourth light guiding element (160) are arranged in the second direction (D2), and the second direction (D2) is perpendicular to the first direction (D1).

7. The light source module according to any one of the preceding claims, wherein the first light guiding element (130) and the third light guiding element (150) are reflectors.

8. The light source module according to any one of the preceding claims, wherein a maximum distance between the first light guiding element (130) and the third light guiding element (150) in the first direction (D1) is greater than a maximum distance between the second light guiding element (140) and the fourth light guiding element (160) in the first direction (D1).

9. The light source module according to any one of the preceding claims, wherein the light source module (100) meets a formula: 1.0<(b/a)<4.0, where "b" is a distance from a spot center (F) of a plurality of light spots (P1, P3) formed by the first light (L1) or the third light (L3) on the optical lens element (170) to a lens element center (B) of the optical lens element (170) in the first direction (D1), and "a" is a distance from the spot center (F) of the plurality of light spots (P1, P3) formed by the first light (L1) or the third light (L3) on the optical lens element (170) to the lens element center (B) of the optical lens element (170) in a direction perpendicular to the first direction (D1).

10. The light source module according to any one of the preceding claims, wherein the light source module (110) meets a formula: c-d <e<c+d, where "c" is a thickness of the first light guiding element (130), the second light guiding element (140), the third light guiding element (150), and the fourth light guiding element (160) divided by a root number 2, "d" is 0.1 times the thickness of the first light guiding element (130), the second light guiding element (140), the third light guiding element (150), and the fourth light guiding element (160), and "e" is a length in the first direction (D1) of an overlap of an orthographic projection of the second light guiding element (140) and an orthographic projection of the fourth light guiding element (160) formed on a light incident surface of the optical lens element (170).

11. A projection apparatus comprising an illumination system (50), at least one light valve (60), and a projection lens (70), wherein:
the illumination system (50) is adapted to provide an illumination light (LB), the illumination system (50) comprises a light source module (100) as claimed in any one of the preceding claims,
wherein the at least one light valve (60) is disposed on a transmission path of the illumination light (LB) to convert the illumination light (LB) into an image light (LI); and
the projection lens (70) is disposed on a transmission path of the image light (LI) to project the image light (LI) out of the projection apparatus (10).

12. The projection apparatus according to claim 11, wherein the illumination system (50) further comprises a light uniforming element (56) disposed on a transmission path of the first light (L1) to the fourth light (L4) from the optical lens element (170).

13. The projection apparatus according to claim 12, wherein, the light source module (100) meets a formula: 1.4 ≦ f * tan( *θ* )/h ≦ 3.7, where "f" is a length in a direction of an optical axis of the light uniforming element (56), " Θ " is an angle between a maximum length from the optical lens element (170) to the light uniforming element (56) and a minimum length from the optical lens element (170) to the light uniforming element (56), and "h" is a length of a long side of the light uniforming element (56) in a direction perpendicular to the direction of the optical axis.
